# FASCICULE DE BREVET EUROPEEN

(11) **EP 4 382 775 B1**
(45) Date de publication et mention de la délivrance du brevet: **23.07.2025**
(21) Numéro de dépôt: 23214021.0
(22) Date de dépôt: 04.12.2023
(51) Int. Cl.: F16H 57/04, F02C 7/36, F02C 7/06

(54) **GOUTTIÈRE DE RÉCUPÉRATION D'HUILE DE LUBRIFICATION POUR RÉDUCTEUR MÉCANIQUE**
SCHMIERÖLRÜCKGEWINNUNGSRINNE FÜR REDUKTIONSGETRIEBE
LUBRICATING OIL RECOVERY GUTTER FOR REDUCTION GEAR

(30) Priorité: 09.12.2022 FR 2213102
(43) Date de publication de la demande: 12.06.2024
(73) Titulaire: Safran Transmission Systems, 92700 Colombes (FR)
(72) Inventeur: MARCOS IZQUIERDO, Juan-Luis, 77550 MOISSY-CRAMAYEL (FR); BOUYAKOUB, Mohamed, 77550 MOISSY-CRAMAYEL (FR); PELTIER, Jordane Emile André, 77550 MOISSY-CRAMAYEL (FR); CUFFARO, Anthony, 77550 MOISSY-CRAMAYEL (FR); PENNACINO, Antoine Jacques Marie, 77550 MOISSY-CRAMAYEL (FR); SEBAN, Jérémy David, 77550 MOISSY-CRAMAYEL (FR)
(74) Mandataire: Cabinet Beau de Loménie

(56) Documents cités:
- EP-A1- 3 575 562
- US-A1- 2019 113 127

## Description

### Domaine Technique

La présente invention concerne le domaine des réducteurs mécaniques pour turbomachine d'aéronef, tels que des réducteurs planétaires entre autres. La présente invention concerne en particulier une gouttière de récupération d'huile de lubrification pour un tel réducteur, et un dispositif de transmission de puissance comprenant un tel réducteur mécanique et une telle gouttière. Technique antérieure

Les réducteurs mécaniques sont couramment utilisés en mécanique, notamment dans le domaine de l'aéronautique. Leur rôle est de modifier le rapport de vitesse et de couple entre un axe d'entrée et un axe de sortie d'un système mécanique.

Les nouvelles générations de turbomachines à plusieurs flux, notamment celles ayant un haut taux de dilution, comportent un réducteur mécanique pour entraîner l'arbre d'une soufflante ou d'une hélice. De manière usuelle, le réducteur permet de transformer la vitesse de rotation, dite rapide, de l'arbre d'une turbine de puissance, en une vitesse de rotation plus lente pour l'arbre entraînant la soufflante.

Un tel réducteur comprend classiquement un pignon central, dit « pignon solaire », une couronne externe, et des pignons, dits « pignons satellites », qui sont en prise entre le pignon solaire et la couronne externe. Les pignons satellites sont maintenus par un châssis appelé porte-satellites. Le pignon solaire, la couronne externe et le porte-satellites sont des organes planétaires, car leurs axes de révolution coïncident avec l'axe longitudinal de la turbomachine. En revanche, les pignons satellites ont chacun un axe de révolution différents de l'axe de révolution de la turbomachine, et répartis à intervalles réguliers sur le même diamètre de fonctionnement autour, de l'axe des roues planétaires. Ces axes des pignons satellites sont parallèles à l'axe longitudinal de la turbomachine.

Il existe plusieurs architectures de réducteur mécanique. Les réducteurs mécaniques connus, utilisés dans les turbomachines à double flux, sont de type planétaire ou épicycloïdal. Il existe également, dans d'autres applications, des architectures dites différentielles. Ces différents types de réducteurs mécaniques se différencient de la manière suivante :
- Sur un réducteur planétaire, le porte-satellite est fixe et la couronne externe constitue l'arbre de sortie du dispositif, qui tourne dans le sens inverse du pignon solaire.
- Sur un réducteur épicycloïdal, la couronne externe est fixe et le porte-satellites constitue l'arbre de sortie du dispositif, qui tourne dans le même sens que le pignon solaire.
- Sur un réducteur différentiel, aucun élément n'est fixé en rotation. La couronne externe tourne dans le sens contraire du pignon solaire et du porte-satellites.

Dans un réducteur planétaire notamment, l'huile de lubrification et de refroidissement utilisée pour lubrifier les différentes roues du réducteur est généralement évacuée par centrifugation par l'intermédiaire de canaux radiaux formés dans une bride de la couronne externe. Pour empêcher l'huile d'être projetée vers l'extérieur et limiter les pertes, il est connu d'utiliser des gouttières de récupération d'huile disposées autour de la bride des couronnes externes, permettant de récupérer l'huile projetée par la force centrifuge. EP 3 575 562 A1 et US 2019/113127 A1 divulguent des exemples de systèmes de transmission de puissance comprenant un dispositif de récupération d'huile de lubrification.

Cependant, les gouttières existantes ne permettent pas de récupérer l'huile de manière satisfaisante. En particulier, certaines gouttières ne permettent pas de retenir l'huile qui peut alors retomber sur les pièces tournantes du réducteur par gravité. D'autres gouttières peuvent retenir en partie l'huile, sans pouvoir empêcher une quantité importante d'huile projetée de rebondir sur les parois de la gouttière compte tenu de la force centrifuge, et de retomber sur les pièces tournantes. Or, lorsque l'huile carénée par une gouttière retombe sur une pièce tournante (la couronne, le porte couronne, la bride de la couronne par exemple) elle peut provoquer des pertes par transferts de quantité de mouvements non négligeables.

Il existe donc un besoin pour une gouttière permettant de remédier au moins en partie aux inconvénients précités.

### Exposé de l'invention

La présente invention concerne un dispositif de transmission de puissance pour turbomachine d'aéronef tel que défini dans la revendication 1, comprenant une gouttière de récupération d'huile de lubrification, notamment pour réducteur mécanique de turbomachine d'aéronef, annulaire autour d'un axe central, et comprenant, dans un plan de coupe parallèle à l'axe central, une première paroi radiale s'étendant radialement par rapport à l'axe central, au moins une paroi inclinée s'étendant depuis une extrémité radiale externe de la première paroi radiale, une portion de guidage ayant une forme générale en U s'étendant depuis une extrémité de la paroi inclinée, et une deuxième paroi radiale s'étendant radialement vers l'extérieur par rapport à l'axe central depuis une extrémité de la portion de guidage, un espace délimité par la première paroi radiale, la deuxième paroi radiale et la paroi inclinée formant une chambre d'admission de l'huile de lubrification, et un espace délimité par la portion de guidage et la deuxième paroi radiale formant une cavité d'évacuation de l'huile de lubrification.

Dans la présente invention, les termes « radial », « axial » et leurs dérivés sont considérés selon l'axe central de la gouttière, ou encore l'axe principal de rotation du réducteur mécanique de vitesse décrit ultérieurement. Ainsi, une direction radiale est une direction perpendiculaire à l'axe central. Par conséquent, la première paroi radiale et la deuxième paroi radiale s'étendent radialement, c'est-à-dire perpendiculairement à l'axe central. En d'autres termes, la première paroi radiale et la deuxième paroi radiale sont des parois annulaires s'étendant dans un plan radial perpendiculaire à l'axe central. La première et la deuxième paroi radiale sont donc parallèles entre elles.

On comprend en outre que la paroi inclinée est inclinée par rapport à la première paroi radiale depuis laquelle elle s'étend, et donc cette paroi inclinée est inclinée par rapport à la direction radiale. La paroi inclinée a donc une forme tronconique et évasée vers l'extérieur depuis la première paroi radiale.

Par ailleurs, on comprend que la portion de guidage s'étend à une première de ses extrémités depuis la paroi inclinée, jusqu'à la deuxième paroi radiale à une deuxième de ses extrémités. La forme en U peut notamment présenter deux parois latérales et un fond courbé. On comprend ainsi, selon ces caractéristiques, que la gouttière présente la forme générale d'un « G » selon le plan de coupe parallèle à l'axe central.

Ainsi, la présence de la première et de la deuxième paroi radiale, parallèles entre elles, forment une section d'entrée permettant de récupérer efficacement, dans la chambre d'admission, l'huile de lubrification projetée lorsque la gouttière de récupération est disposée autour d'un réducteur mécanique. En outre, la paroi inclinée permet de dévier l'huile éjectée vers la portion de guidage en forme de U, cette dernière guidant alors l'huile, compte tenu de sa forme, vers le fond de la cavité d'évacuation formée entre la portion de guidage et la deuxième paroi radiale.

La configuration de la gouttière de récupération d'huile de lubrification selon l'invention, en forme générale de « G », ou d'escargot, permet donc d'améliorer l'efficacité de la récupération de l'huile éjectée par le réducteur mécanique en fonctionnement, en évitant à l'huile de retomber sur les parties tournantes du réducteur par gravité, et en limitant la quantité d'huile rebondissant sur les parois de la gouttière. Il est ainsi possible de limiter les pertes de rendement du réducteur par transferts de quantité de mouvements de l'huile.

Dans certains modes de réalisation, la portion de guidage comprend une première paroi axiale s'étendant parallèlement à l'axe central depuis l'extrémité de la paroi inclinée, une paroi courbe formant un fond de la forme en U de la portion de guidage et s'étendant depuis une extrémité de la première paroi axiale, et une deuxième paroi axiale s'étendant parallèlement à l'axe central depuis une extrémité de la paroi courbe, la deuxième paroi radiale s'étendant depuis une extrémité de la deuxième paroi axiale.

On comprend que la première paroi axiale et la deuxième paroi constituent respectivement les deux parois latérales de la forme en U de la portion de guidage, ces parois étant chacune parallèles à l'axe central, et donc parallèles entre elles. Par ailleurs, la paroi courbe constitue le fond du U reliant les deux parois latérales. On comprend donc que lorsque l'huile de lubrification est récupérée dans la chambre d'admission via la section d'entrée, puis déviée par la paroi inclinée, elle est guidée vers le fond de la cavité d'évacuation par la paroi courbe, la deuxième paroi axiale constituant le fond de ladite cavité.

Dans certains modes de réalisation, un rapport entre une distance F entre une extrémité radiale externe de la deuxième paroi radiale et la première paroi axiale, et une distance radiale E entre l'extrémité radiale externe de la deuxième paroi radiale et la deuxième paroi axiale, est tel que F/(E + F) est compris entre 0,4 et 0,8.

On comprend que la distance E + F représente la distance entre la première et la deuxième paroi axiale parallèles entre elles, dans la direction radiale. En outre, la distance E représente la hauteur de la deuxième paroi radiale dans la direction radiale, c'est-à-dire la hauteur jusqu'à laquelle l'huile peut s'accumuler dans la cavité d'évacuation. Par ailleurs, la distance F représente la hauteur de la section de passage de l'huile vers la cavité d'évacuation, c'est-à-dire la section permettant à l'huile de passer de la chambre d'admission à la cavité d'évacuation, après avoir été déviée par la paroi inclinée.

Ainsi, plus la distance F est grande, plus la section de passage entre la chambre d'admission et la cavité d'évacuation est grande. De même, plus la distance E est grande, plus la deuxième paroi radiale, et donc le niveau d'huile récupéré et accumulé dans la cavité d'évacuation, est haute. Ces valeurs du rapport entre E et F permettent ainsi d'améliorer la récupération de l'huile de récupération, en maximisant la distance F permettant de faciliter l'admission de l'huile dans la cavité d'évacuation, tout en conservant une hauteur E suffisamment élevée pour retenir la plus grande quantité d'huile possible.

Dans certains modes de réalisation, dans le plan de coupe parallèle à l'axe central, un angle entre la paroi inclinée et une direction radiale perpendiculaire à l'axe central est compris entre 10° et 60°.

Ces valeurs permettent d'améliorer l'efficacité de la déviation de l'huile de la chambre d'admission vers la cavité d'évacuation, et donc l'efficacité de la récupération de l'huile de lubrification par la gouttière.

La paroi inclinée est une première paroi inclinée s'étendant depuis l'extrémité radiale externe de la première paroi radiale, la gouttière comprenant une deuxième paroi inclinée s'étendant entre une extrémité de la première paroi inclinée et la portion de guidage, un angle entre la deuxième paroi inclinée et une direction radiale perpendiculaire à l'axe central étant plus important qu'un angle entre la première paroi inclinée et ladite direction radiale.

On comprend que la portion de paroi entre la première paroi radiale et la première paroi axiale de la portion de guidage comprend deux parois inclinées différemment l'une de l'autre. Plus précisément, la première paroi inclinée est une paroi tronconique s'étendant depuis l'extrémité radiale externe de la première paroi radiale en s'évasant depuis ladite extrémité, et formant un premier angle par rapport à la direction radiale. Par ailleurs, la deuxième paroi inclinée est une paroi tronconique également, s'étendant depuis l'extrémité de la première paroi inclinée en s'évasant depuis ladite extrémité, et formant un deuxième angle par rapport à la direction radiale, le deuxième angle étant plus grand que le premier angle. Autrement dit, la deuxième paroi inclinée présente une pente plus faible par rapport à l'axe central que la première paroi inclinée.

La présence de ces deux parois, inclinées de manière différente l'une de l'autre, permet d'améliorer encore l'efficacité de la déviation de l'huile de lubrification. En effet, lorsque la gouttière est disposée autour d'un réducteur mécanique pour en récupérer l'huile de lubrification projetée, la forme de la gouttière comprenant deux parois inclinées différemment tient ainsi compte de la position axiale à laquelle un jet d'huile est éjecté radialement vers l'extérieur du réducteur mécanique vers la chambre d'admission, et en particulier de la distance entre le point d'éjection de l'huile et son point d'impact sur l'une ou l'autre des parois inclinées.

Le dispositif de transmission de puissance pour turbomachine d'aéronef comprend :
- un réducteur mécanique comprenant un pignon central et une couronne externe coaxiaux l'un avec l'autre autour d'un axe principal de rotation, et des pignons satellites engrenant avec le pignon central et la couronne externe, la couronne externe comprenant deux demi-couronnes ayant chacune une bride annulaire externe fixées l'une à l'autre,
- au moins un premier canal radial d'éjection d'huile formé entre les brides annulaires et configuré pour éjecter de l'huile de lubrification par centrifugation,
- une gouttière telle que définie précédemment disposée radialement autour des brides annulaires, de telle sorte que la chambre d'admission de la gouttière soit radialement en regard du premier canal radial d'éjection d'huile.

La gouttière annulaire étant disposée autour de la couronne externe, et notamment des brides annulaires, l'axe central de la gouttière et l'axe principal de rotation du réducteur sont coaxiaux. On comprend en outre que les brides annulaires externes s'étendent radialement vers l'extérieur, c'est-à-dire dans une direction perpendiculaire à l'axe principal de rotation, un plan radial comprenant l'interface de jonction entre les brides annulaires et étant perpendiculaire à l'axe principal de rotation.

Le premier canal radial d'éjection d'huile peut être un orifice formé à l'interface de jonction entre les brides annulaires externes de la couronne externe, dans une direction radiale perpendiculaire à l'axe principal de rotation. Par ailleurs, le réducteur mécanique de vitesse est de préférence un réducteur planétaire, la couronne externe tournant alors autour de l'axe central. Par conséquent, lors de la rotation de la couronne externe, l'huile de lubrification circulant dans le réducteur mécanique peut être évacuée radialement vers l'extérieur par la force centrifuge, par l'intermédiaire du premier canal radial d'éjection d'huile, en direction de la gouttière, en particulier vers la chambre d'admission disposée radialement en vis-à-vis du premier canal radial d'éjection d'huile.

Le dispositif comprend une pluralité de premiers canaux d'éjection d'huile compris dans un premier plan radial perpendiculaire à l'axe principal de rotation, le dispositif comprenant au moins un deuxième plan radial perpendiculaire à l'axe principal de rotation et comprenant une pluralité de deuxièmes canaux d'éjection d'huile, le au moins un deuxième plan radial étant décalé axialement par rapport au premier plan radial.

On comprend donc que le premier plan radial est le plan comprenant l'interface de jonction entre les brides annulaires externes de la couronne externe, le premier plan radial comprenant une pluralité de premiers canaux d'éjection d'huile répartis circonférentiellement autour de l'axe principal de rotation et s'étendant chacun perpendiculairement audit axe principal de rotation. Par ailleurs, le deuxième plan radial peut être un plan comprenant une interface de jonction entre l'une des deux brides annulaires externes, et une autre pièce du dispositif de transmission de puissance, par exemple un arbre de rotor. Ainsi, le dispositif de transmission de puissance comprend deux plans radiaux d'éjection d'huile disposés chacun en vis-à-vis de la chambre d'admission de la gouttière en étant décalés axialement l'un de l'autre dans la direction de l'axe principal de rotation.

Dans certains modes de réalisation, le premier et le deuxième plan radial sont décalés axialement l'un de l'autre de telle sorte qu'une distance axiale minimale entre la première et la deuxième paroi radiale de la gouttière est au minimum 20% plus grande qu'une distance axiale entre le premier et le deuxième plan radial.

Il est ainsi possible de maximiser la quantité d'huile récupérée dans la chambre d'admission par l'intermédiaire de la section d'entrée entre la première et la deuxième paroi radiale, notamment lorsque la largeur d'éjection d'huile est augmentée par la présence d'au moins deux plans radiaux d'éjection d'huile.

Dans certains modes de réalisation, une distance axiale minimale entre la première paroi radiale de la gouttière et le plan radial situé axialement le plus proche de la première paroi radiale est supérieure ou égale à 1 mm, et une distance axiale minimale entre la deuxième paroi radiale de la gouttière et le plan radial situé axialement le plus proche de la deuxième paroi radiale est supérieure ou égale à 1 mm.

On comprend que le premier plan radial, le deuxième plan radial, la première paroi radiale et la deuxième paroi radiale sont tous parallèles les uns aux autres et perpendiculaires à l'axe principal de rotation. Cette valeur minimum de la distance entre la première paroi radiale et le premier plan radial (par exemple), et entre la deuxième paroi radiale et le deuxième plan radial (par exemple) permet de limiter les risques d'impacts de l'huile sur lesdites première et deuxième parois radiales dus aux mouvements relatifs entre la partie fixe, par exemple un carter portant la gouttière, et le réducteur mécanique. Cela permet par conséquent d'améliorer l'efficacité de la récupération d'huile de lubrification par la gouttière. On notera que cette caractéristique s'applique également aux configurations dans lesquelles le dispositif de transmission de puissance comprend un unique plan radial, ou plus de deux plans radiaux d'éjection d'huile.

Le dispositif comprend un arbre de rotor ayant une bride de rotor fixée à l'une des brides annulaires de la couronne externe, les deuxièmes canaux radiaux d'éjection d'huile étant formés entre ladite bride annulaire et la bride de rotor.

En d'autres termes, l'interface de jonction entre la bride de rotor et l'une des deux brides annulaires de la couronne externe forme le deuxième plan radial comprenant la pluralité de deuxièmes canaux radiaux d'éjection d'huile. Les deuxièmes canaux radiaux d'éjection d'huile peuvent être des orifices formés radialement à l'interface entre la bride de rotor et la bride annulaire externe de la couronne externe, dans une direction perpendiculaire à l'axe principal de rotation et étant répartis circonférentiellement autour de l'axe principal de rotation. L'arbre de rotor peut être l'arbre reliant mécaniquement la couronne externe à la soufflante.

Selon la présente invention, la première et la deuxième paroi inclinée sont disposées chacune sur le premier et sur le deuxième plan radial respectivement, la première paroi inclinée formant un premier angle avec le premier plan radial, et la deuxième paroi inclinée formant un deuxième angle avec le deuxième plan radial, le premier angle étant plus petit que le deuxième angle lorsque le premier plan radial est plus éloigné de la deuxième paroi radiale que le deuxième plan radial, et inversement.

On comprend que la première paroi inclinée est disposée sur le premier plan radial, en ce qu'elle est disposée radialement en vis-à-vis dudit premier plan radial, c'est-à-dire à une même position axiale que ledit premier plan radial. Ainsi, le premier plan radial passe par la première paroi inclinée, de telle sorte que l'huile éjectée via les premiers canaux radiaux d'éjection d'huile impacte la première paroi inclinée. De même, on comprend que la deuxième paroi inclinée est disposée sur le deuxième plan radial, en ce qu'elle est disposée radialement en vis-à-vis dudit deuxième plan radial, c'est-à-dire à une même position axiale que ledit deuxième plan radial. Ainsi, le deuxième plan radial passe par la deuxième paroi inclinée, de telle sorte que l'huile éjectée via les deuxièmes canaux radiaux d'éjection d'huile impacte la deuxième paroi inclinée.

Selon cette configuration, lorsque le premier plan radial est le plus éloigné de la deuxième paroi radiale, une distance entre le point d'injection de l'huile via les premiers canaux radiaux d'éjection d'huile et le point d'impact de l'huile sur la première paroi inclinée, est plus faible qu'une distance entre le point d'injection de l'huile via les deuxièmes canaux radiaux d'éjection d'huile et le point d'impact de l'huile sur la deuxième paroi inclinée, compte tenu de la forme évasée vers l'extérieur des parois inclinées. Par conséquent, le fait que la deuxième paroi inclinée présente un angle d'inclinaison plus important que la première paroi inclinée permet d'adapter l'angle d'incidence des jets d'huile impactant sur les parois en fonction de la position axiale de l'injection d'huile et donc de la pression des jets, permettant ainsi d'améliorer l'efficacité de la déviation de l'huile vers la cavité d'évacuation, et donc l'efficacité de la récupération d'huile par la gouttière, en particulier lorsque de l'huile est éjectée sur plusieurs plans radiaux d'injection.

Dans certains modes de réalisation, le dispositif comprend trois plans radiaux d'éjection d'huile décalés axialement les uns des autres, une distance axiale minimale entre la première et la deuxième paroi radiale de la gouttière étant au minimum 20% plus grande qu'une distance axiale entre les plans radiaux les plus éloignés axialement l'un de l'autre.

On comprend qu'un premier plan radial est formé entre les brides annulaires externes de la couronne externe, un deuxième plan radial est formé entre l'une desdites brides annulaires et la bride de rotor de l'arbre de rotor par exemple, et un troisième plan radial est formé entre l'autre desdites brides annulaires et une autre pièce tournante du dispositif de transmission de puissance, par exemple une pièce permettant de caréner le réducteur mécanique. Les trois plans radiaux sont décalés axialement les uns par rapport aux autres, le premier plan radial étant alors disposé entre le deuxième et le troisième plan radial. Dans cette configuration, la distance axiale minimale entre la première et la deuxième paroi radiale de la gouttière est au minimum 20% plus grande que la distance axiale entre le deuxième et le troisième plan radial.

La largeur d'éjection d'huile étant encore augmentée par la présence de trois plans radiaux d'éjection d'huile, cette caractéristique permet ainsi de maximiser la quantité d'huile récupérée dans la chambre d'admission par l'intermédiaire de la section d'entrée entre la première et la deuxième paroi radiale.

Dans certains modes de réalisation, une distance radiale entre une extrémité radialement interne de la gouttière et une extrémité radialement externe des brides annulaires de la couronne externe est supérieure ou égale à 1 mm.

En d'autres termes, la gouttière annulaire est disposée entièrement autour du réducteur mécanique de vitesse, et radialement à l'extérieur des brides annulaires de la couronne externe. La présence d'un jeu supérieure ou égale à 1 mm entre la gouttière et la couronne externe permet de faciliter le montage de la gouttière autour de la couronne, et de limiter les risques de contact entre la gouttière et la couronne lorsque le réducteur est en fonctionnement.

Dans certains modes de réalisation, les parois inclinées sont agencées de telle sorte à dévier vers la cavité d'évacuation un jet d'huile radial éjecté par les canaux radiaux d'éjection d'huile.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est un plan en coupe axiale d'une turbomachine comprenant un réducteur planétaire,
[Fig. 2] La figure 2 représente schématiquement une vue détaillée de la turbomachine de la figure 1, notamment d'un dispositif de transmission de puissance selon l'invention, comprenant le réducteur planétaire de la figure 1,
[Fig. 3] La figure 3 représente schématiquement une vue détaillée d'une extrémité radialement externe du réducteur planétaire de la figure 2,
[Fig. 4] La figure 4 représente schématiquement une vue de face d'un ensemble comprenant une gouttière de récupération d'huile selon l'invention, portée par un carter et disposée autour de la couronne externe du réducteur planétaire,
[Fig. 5] La figure 5 représente schématiquement une vue latérale dans un plan de coupe B-B de l'ensemble de la figure 4,
[Fig. 6] La figure 6 représente schématiquement une section transversale de la gouttière de récupération d'huile de l'invention.

### Description des modes de réalisation

Dans la suite de la description, les termes « radial », « axial », « interne », « externe » et leurs dérivés sont considérés par rapport à l'axe central X de la gouttière 100 décrite ci-après, ou de l'axe principal de rotation Y du réducteur mécanique 10. Ainsi, une direction radiale est perpendiculaire à l'axe central X, et une direction axiale est parallèle à l'axe central X. De même, une paroi radiale est perpendiculaire à l'axe central X, et une paroi axiale est parallèle à l'axe central X.

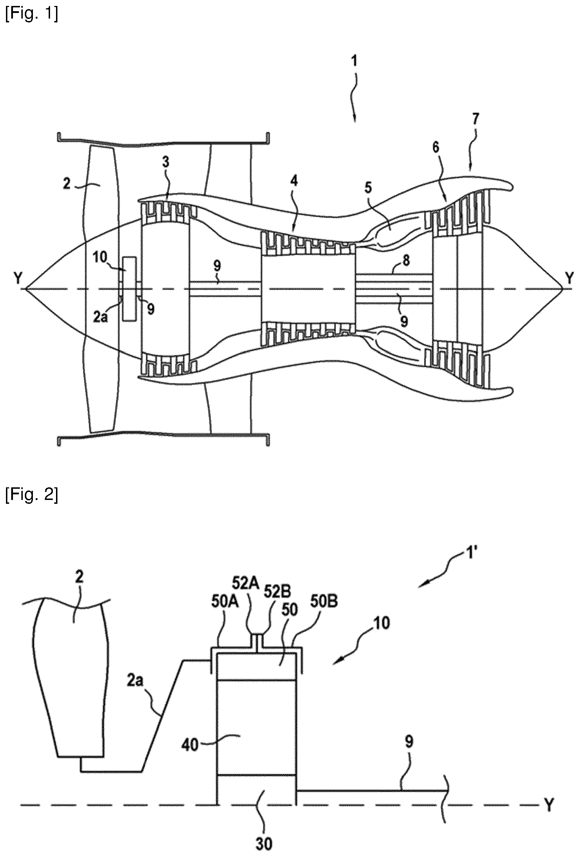

La figure 1 représente, en coupe selon un plan vertical passant par son axe principal Y, une turbomachine d'aéronef, notamment un turboréacteur à double flux à réducteur 1. Il comporte, d'amont en aval selon la circulation du flux d'air, une soufflante 2, un compresseur basse-pression 3, un compresseur haute-pression 4, une chambre de combustion 5, une turbine haute-pression 6, et une turbine basse-pression 7.

Dans un tel turboréacteur à réducteur 1, la turbine haute-pression 6 entraîne le compresseur haute-pression 4 à l'aide d'un arbre haute-pression 8. La turbine basse-pression 7, également appelée turbine rapide, entraîne quant à elle le compresseur basse-pression 3, également appelé compresseur rapide, à l'aide d'un arbre basse-pression 9. La turbine rapide 7 entraîne également l'arbre de rotor 2a de la soufflante 2 par l'intermédiaire d'un réducteur de vitesse mécanique 10 (nommé plus simplement « réducteur mécanique 10 » dans la suite de la description). De cette manière, la soufflante 2 peut être entraînée à vitesse réduite, ce qui est favorable du point de vue aérodynamique, tandis que le compresseur basse-pression 3 peut être entraîné à vitesse plus importante, ce qui est favorable d'un point de vue thermodynamique. Le réducteur mécanique 10 peut être un réducteur mécanique planétaire. De manière alternative, le réducteur mécanique peut être un réducteur à train épicycloïdal, ou un réducteur différentiel. On notera en outre que l'invention s'applique aux réducteurs mécaniques comprenant des porte-satellites monoblocs ou de type « cage et porte-cage ».

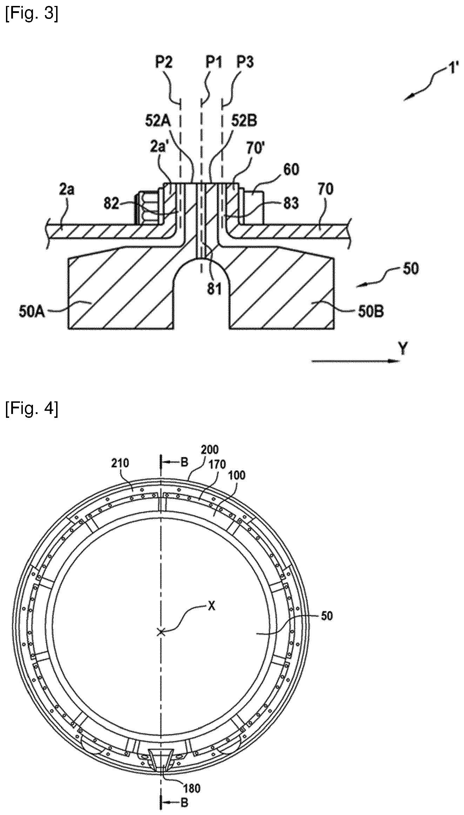

La figure 2 représente, en coupe et selon le même plan vertical passant par son axe principal Y, une vue détaillée et schématique du turboréacteur 1 de la figure 1, notamment du dispositif de transmission de puissance 1' comprenant le réducteur mécanique 10, et la figure 3 représente une vue détaillée d'une extrémité radialement externe du dispositif 1' de la figure 2.

Le réducteur mécanique 10 est un réducteur mécanique à train planétaire double étage formé d'un train d'engrenage connu sous l'acronyme anglais RGB pour « *Reduction Gear Box* ». Certaines pièces, comme les portes satellites ou le carter entourant le réducteur, étant masquées pour en faciliter la description. Le réducteur mécanique 10 comprend un pignon solaire 30, comprenant une pluralité de dents sur sa face radialement externe, et une couronne externe 50 comprenant une pluralité de dents sur sa face radialement interne. Le pignon solaire 30 et la couronne externe 50 sont coaxiaux et axisymétriques autour de l'axe principal de rotation Y. Le réducteur mécanique 10 comprend en outre des pignons satellites 40, classiquement au moins trois, chacun étant disposé entre le pignon solaire 30 et la couronne externe 50, en étant en prise avec ces derniers, et chacun tournant autour d'un axe de rotation sensiblement parallèle à l'axe principal de rotation Y.

De manière classique, la couronne externe 50 comprend deux demi-couronnes 50A, 50B, comprenant chacune une bride annulaire externe 52A, 52B. Les deux demi-couronnes 50A, 50B sont assemblées par l'intermédiaire des brides annulaires externes 52A, 52B et de moyens de fixation axiaux tels que des vis et écrous 60.

En outre, le pignon solaire 30 est couplé à l'arbre basse-pression 9, et la couronne externe 50 est couplée à la soufflante 2 par l'intermédiaire de l'arbre de rotor 2a. Plus précisément, la bride annulaire externe 52A de l'une des deux demi-couronnes 50A est fixée à une bride de rotor 2a' radiale de l'arbre de rotor 2a de la soufflante 2, par l'intermédiaire des moyens de fixation 60.

Par ailleurs, dans cet exemple, la bride annulaire externe 52B de l'autre des deux demi-couronnes 50B est fixée à une bride radiale 70' d'une autre pièce 70 tournante, par exemple une pièce permettant de caréner le réducteur mécanique 10.

Dans un tel réducteur 10, l'huile de lubrification qui est utilisée pour lubrifier et refroidir les différents roulements et dentures du réducteur 10 est généralement projetée par la force centrifuge à travers la couronne externe 50. Afin de faciliter l'éjection de cette huile, des canaux radiaux d'éjection d'huile sont formés à travers la couronne externe 50, notamment via des plans radiaux d'éjections d'huile formés entre les différentes brides radiales.

Plus précisément, dans cet exemple, un premier plan radial P1 est formé par l'interface de jonction entre les brides annulaires externes 52A, 52B des demi-couronnes 50A, 50B. Des premiers canaux radiaux d'éjection d'huile 81 (un seul est visible sur la figure 3) sont formés dans ce premier plan radial P1, et sont répartis circonférentiellement autour de l'axe principal de rotation Y.

De même, un deuxième plan radial P2 est formé par l'interface de jonction entre la bride annulaire externe 52A de l'une des demi-couronnes 50A et la bride de rotor 2a' de l'arbre de rotor 2a. Des deuxièmes canaux radiaux d'éjection d'huile 82 (un seul est visible sur la figure 3) sont formés dans ce deuxième plan radial P2, et sont répartis circonférentiellement autour de l'axe principal de rotation Y.

Enfin, un troisième plan radial P3 est formé par l'interface de jonction entre la bride annulaire externe 52B de l'autre des demi-couronnes 50B et la bride radiale 70' de la pièce 70. Des troisièmes canaux radiaux d'éjection d'huile 83 (un seul est visible sur la figure 3) sont formés dans ce troisième plan radial P3, et sont répartis circonférentiellement autour de l'axe principal de rotation Y.

Les plans radiaux P1, P2, P3 d'éjection d'huile sont tous les trois perpendiculaires à l'axe principal de rotation Y. Ils sont en outre parallèles les uns par rapport aux autres et décalés axialement, le long de l'axe principal de rotation Y, les uns par rapport aux autres.

Après éjection de l'huile de lubrification radialement vers l'extérieur via les canaux radiaux d'éjection d'huile 81, 82, 83, l'huile ruisselle ensuite par gravité vers le bas d'une enceinte formée par le carter 200 entourant le réducteur, où elle peut pompée vers le réducteur pour être à nouveau utilisée. Ce mode de récupération présente cependant des inconvénients liés à l'absence de contrôle de la projection de l'huile.

Pour limiter ces inconvénients, une gouttière annulaire 100 (nommée plus simplement gouttière 100 dans la suite de la description) de récupération d'huile est disposée autour de la couronne externe 50, et permet de collecter l'huile projetée par les canaux radiaux d'éjection d'huile 81, 82, 83. La gouttière 100 selon l'invention est décrite en référence aux figures 4 à 6.

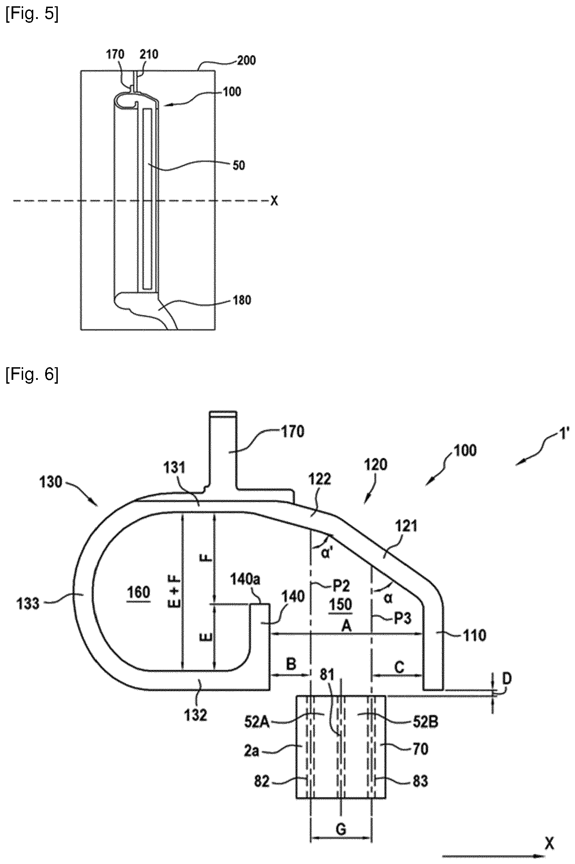

La figure 4 représente schématiquement une vue de face, parallèle à l'axe central X de la gouttière 100, d'un ensemble comprenant la couronne externe 50, la gouttière 100 et un carter 200 fixe du turboréacteur 1, portant la gouttière 100. En outre, la figure 5 représente schématiquement une vue latérale en coupe de cet ensemble, perpendiculairement à l'axe central X, dans un plan de coupe B-B de l'ensemble de la figure 4. On notera que lorsque la gouttière 100 est disposée dans le turboréacteur 1, notamment dans le dispositif de transmission de puissance 1' autour de la couronne externe 50, l'axe central X de la gouttière 100 est coaxial et confondu avec l'axe principal de rotation Y du réducteur 10, autrement dit du turboréacteur 1.

La gouttière 100 comprend, sur sa périphérie radialement externe, une bride annulaire 170 fixée à une bride annulaire 210 du carter 200, disposée le long d'une face radialement interne dudit carter 200. Ainsi, la gouttière 100 fixée au carter 200 fixe est elle-même fixe et immobile par rapport au carter 200 du turboréacteur 1.

En outre, la gouttière 100 comprend, dans sa partie inférieure, un conduit d'évacuation 180. L'huile stockée et accumulée dans la cavité d'évacuation 160 décrit ci-après peut ainsi s'écouler le long de celle-ci par gravité jusqu'à ce conduit d'évacuation par lequel elle peut être évacuée vers l'extérieur du réducteur mécanique 10 sans être retombée sur les différents roulements de celui-ci, et être éventuellement réutilisée pour lubrifier à nouveau ces roulements.

Par ailleurs, la gouttière 100 est disposée radialement autour de la couronne externe 50, de telle sorte que les brides annulaires externes 52A, 52B soient disposées radialement en vis-à-vis d'une section d'entrée de la gouttière 100 permettant de collecter l'huile éjectée par l'intermédiaire des canaux radiaux d'éjection d'huile 81, 82, 83.

A cet égard, la gouttière 100 selon l'invention présente une forme particulièrement avantageuse, illustrée plus en détails sur la figure 6, représentant une section transversale, perpendiculaire à une direction azimutale, de la gouttière 100 disposée en vis-à-vis d'une extrémité radialement externe de la couronne externe 50, notamment des brides des brides annulaires externes 52A, 52B de celle-ci. On notera que pour simplifier la description ci-après, axée sur la structure et la géométrie de la gouttière 100, certains éléments tels que le carter 200 ou la partie inférieure de la couronne externe 50 sont volontairement masqués sur la figure 6. En fait, outre la gouttière 100, seules les extrémités radiales des brides radiales 52A, 52B, 2a', 70' de la couronne externe 50, de l'arbre de rotor 2a et de la pièce tournante 70, sont représentées.

Par « radialement en vis-à-vis », on comprend que les brides annulaires externes 52A, 52B, en particulier les canaux radiaux 81, 82, 83 et les plans radiaux P1, P2, P3 d'éjection d'huile, sont disposés à une même position axiale le long de l'axe central X, que la section d'entrée de la gouttière 100, et notamment sa chambre d'admission 150 décrite ci-après, de manière à récupérer l'huile éjectée par lesdits canaux radiaux d'éjection d'huile 81, 82, 83.

Par ailleurs, la gouttière 100 présente, selon cette section, la forme générale d'un « G », ou encore d'un escargot. Elle comprend notamment une première paroi radiale 110, de forme annulaire autour de l'axe central X. Une paroi inclinée 120, de forme tronconique, s'étend depuis une extrémité radialement externe de la première paroi radiale 110, une extrémité radiale interne de la première paroi radiale 110 étant une extrémité libre.

Par ailleurs, une portion de guidage 130 s'étend depuis une extrémité radialement externe de la paroi inclinée 120. La portion de guidage 130 présente, selon cette section de la gouttière 100, la forme générale d'un « U ». En particulier, la portion de guidage 130 comprend une première paroi axiale 131 s'étendant depuis l'extrémité radialement externe de la paroi inclinée 120 dans une direction s'éloignant de la première paroi radiale 110, une paroi courbe 133 s'étendant depuis une extrémité axiale de la première paroi axiale 131, cette portion de la gouttière effectuant alors un demi-tour de telle sorte à revenir vers la première paroi radiale 110, et une deuxième paroi axiale 132 s'étendant depuis l'autre extrémité de la paroi courbe 133 dans la direction de la première paroi radiale 110.

La gouttière 100 comprend enfin une deuxième paroi radiale 140 s'étendant radialement vers l'extérieur depuis une extrémité axiale de la deuxième paroi axiale 132, de forme annulaire autour de l'axe central X. La première paroi radiale 110 et la deuxième paroi axiale 140 sont parallèles entre elles et perpendiculaires à l'axe central X. Elles sont chacune disposées axialement de part et d'autre de l'ensemble formé par l'assemblage des brides radiales 52A, 52B, 2a' et 70', en étant espacée axialement l'une de l'autre d'une distance A.

La distance A est telle qu'elle est supérieure ou égale à 20% d'une distance G, qui est la distance axiale entre les deux plans radiaux d'éjection d'huile les plus éloignés axialement les uns des autres, dans cet exemple le deuxième plan radial P2 et le troisième plan radial P3. En outre, une distance axiale B, qui est la distance axiale entre la deuxième paroi radiale 140 et le plan radiale d'éjection d'huile le plus proche de celle-ci, ici le deuxième plan radial P2, et une distance axiale C, qui est la distance axiale entre la première paroi radiale 110 et le plan radial d'éjection d'huile le plus proche de celle-ci, ici le troisième plan radial P3, sont telles que B et C sont chacune supérieure ou égale à 1 mm.

On notera en outre qu'une distance D entre l'extrémité radialement externe de l'ensemble formé par l'assemblage des brides radiales 52A, 52B, 2a' et 70', et l'extrémité radialement interne de la gouttière 100, notamment de la première paroi radiale 110 et de la deuxième paroi radiale 140, est non nulle. En d'autres termes, la gouttière 100 est disposée entièrement radialement à l'extérieur de la couronne externe 50.

Ainsi, les première et deuxième parois radiales 110, 140 forment la section d'entrée de la gouttière 100, par laquelle passe l'huile éjectée par les canaux radiaux d'éjection d'huile 81, 82, 83, et permettant de récupérer de manière efficace cette huile.

En particulier, la première paroi radiale 110, la paroi inclinée 120, et une première face de la deuxième paroi radiale 140, délimitent une chambre d'admission 150, dans laquelle est admise l'huile éjectée par les canaux radiaux d'éjection d'huile 81, 82, 83. En outre, la portion de guidage 130 et une deuxième face, opposée à la première face, de la deuxième paroi radiale 140, délimitent une cavité d'évacuation 160 de l'huile de lubrification, dans laquelle l'huile provenant de la chambre d'admission 150 est transférée et peut s'accumuler. En particulier, l'huile éjectée et projetée par les canaux radiaux d'éjection d'huile 81, 82, 83 vient impacter la paroi inclinée 120. Du fait de l'inclinaison de celle-ci, l'huile impactant la paroi inclinée 120 est déviée vers la cavité d'évacuation 160. L'huile est ensuite guidée par la portion de guidage 130 en « U », notamment par la paroi courbe 133, vers le fond ladite cavité d'évacuation 160.

En particulier, la deuxième paroi radiale 140 forme une paroi latérale d'un réservoir permettant d'accumuler de l'huile, la deuxième paroi axiale 132 formant le fond de ce réservoir. A cet égard, une distance radiale E est une distance radiale entre l'extrémité radialement externe 140a de la deuxième paroi radiale 140, et la deuxième paroi axiale 132. La distance E est en fait équivalente à la hauteur de la deuxième paroi radiale 140 permettant de retenir l'huile dans la cavité d'évacuation 160. En outre, une distance radiale F est une distance radiale entre l'extrémité radialement externe 140a de la deuxième paroi radiale 140, et la première paroi axiale 131. La distance F est en fait équivalente à la hauteur de l'ouverture permettant à l'huile de passer de la chambre d'admission 150 à la cavité d'évacuation 160, après déviation par la paroi inclinée 120. Ainsi, la distance radiale E + F correspond à la distance radiale entre la première paroi axiale 131 et la deuxième paroi axiale 132, celles-ci étant parallèles entre elles. En outre, un rapport entre la distance E et la distance F est tel que F/(E + F) est compris entre 0,4 et 0,8.

Par ailleurs, compte tenu de la forme évasée et tronconique de la paroi inclinée 120, la distance radiale entre le point d'injection de l'huile à l'extrémité radialement externe des troisièmes canaux radiaux d'éjection d'huile 83 et la paroi inclinée 120, et inférieure à la distance radiale entre le point d'injection de l'huile à l'extrémité radialement externe des deuxièmes canaux radiaux d'éjection d'huile 82 et la paroi inclinée 120.

Par conséquent, afin de faciliter la déviation de l'huile vers la cavité d'évacuation 160, la paroi inclinée 120 est formée en deux parties. Une première paroi inclinée 121 s'étend depuis l'extrémité radialement externe de la première paroi radiale 110, en s'évasant radialement vers l'extérieur. La première paroi inclinée 121 forme un premier angle α par rapport à la première paroi radiale 110, ou encore par rapport aux plans radiaux P1, P2, P3 d'éjection d'huile. Une deuxième paroi inclinée 122 s'étend depuis une extrémité radialement externe de la première paroi inclinée 121, en s'évasant radialement vers l'extérieur. La deuxième paroi inclinée 122 forme un deuxième angle α' par rapport à la première paroi radiale 110, ou encore par rapport aux plans radiaux P1, P2, P3 d'éjection d'huile, le deuxième angle α' étant supérieur au premier angle α. La première paroi axiale 131 de la portion de guidage 130 s'étend depuis l'extrémité radialement externe de la deuxième paroi inclinée 122.

Dans cet exemple, le deuxième plan radial P2 passe par la deuxième paroi inclinée 122, et le troisième plan radial P3 passe par la première paroi inclinée 121. En d'autres termes, l'huile de lubrification éjectée par les deuxièmes canaux radiaux d'éjection d'huile 82 impacte la deuxième paroi inclinée 122, et l'huile de lubrification éjectée par les troisièmes canaux radiaux d'éjection d'huile 83 impacte la première paroi inclinée 121.

On notera que cet exemple n'est pas limitatif, la paroi inclinée 180 pourrait en effet comprendre trois parois inclinées formant chacune un angle différent et correspondant chacune à un des trois plans radiaux P1, P2, P3.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications.

Par conséquent, la description et les dessins doivent être considérés dans un sens illustratif plutôt que restrictif.

## Revendications

1. Dispositif de transmission de puissance (1') pour turbomachine d'aéronef, comprenant :
- un réducteur mécanique (10) comprenant un pignon central (30) et une couronne externe (50) coaxiaux l'un avec l'autre autour d'un axe principal de rotation (Y), et des pignons satellites (40) engrenant avec le pignon central (30) et la couronne externe (50), la couronne externe (50) comprenant deux demi-couronnes (50A, 50B) ayant chacune une bride annulaire externe (52A, 52B) fixées l'une à l'autre,
- une pluralité de premiers canaux d'éjection d'huile (81) compris dans un premier plan radial (P1) perpendiculaire à l'axe principal de rotation (Y), formés entre les brides annulaires (52A, 52B) et configurés pour éjecter de l'huile de lubrification par centrifugation,
- une gouttière (100) de récupération d'huile de lubrification, annulaire autour d'un axe central (X), et comprenant, dans un plan de coupe parallèle à l'axe central (X), une première paroi radiale (110) s'étendant radialement par rapport à l'axe central, au moins une première paroi inclinée (121) par rapport à la première paroi radiale (110) et s'étendant depuis une extrémité radiale externe de la première paroi radiale (110), une portion de guidage (130) ayant une forme générale en U s'étendant depuis une extrémité de la paroi inclinée (120), et une deuxième paroi radiale (140) s'étendant radialement vers l'extérieur par rapport à l'axe central (X) depuis une extrémité de la portion de guidage (130), un espace délimité par la première paroi radiale (110), la deuxième paroi radiale (140) et l'au moins une première paroi inclinée (121) formant une chambre d'admission (150) de l'huile de lubrification, et un espace délimité par la portion de guidage (130) et la deuxième paroi radiale (140) formant une cavité d'évacuation (160) de l'huile de lubrification, la gouttière (100) étant disposée radialement autour des brides annulaires (52A, 52B), de telle sorte que la chambre d'admission (150) de la gouttière soit radialement en regard des premiers canaux d'éjection d'huile (81), le dispositif (1') comprenant un arbre de rotor (2a) ayant une bride de rotor (2a') fixée à l'une des brides annulaires (52A, 52B) de la couronne externe (50), et au moins un deuxième plan radial (P2) perpendiculaire à l'axe principal de rotation (Y) et comprenant une pluralité de deuxièmes canaux d'éjection d'huile (82) formés entre la bride de rotor (2a') et ladite une des brides annulaires (52A, 52B), le au moins un deuxième plan radial (P2) étant décalé axialement par rapport au premier plan radial (P1), **caractérisé en ce que** la gouttière (100) comprend une deuxième paroi inclinée (122) délimitant, avec la première paroi radiale (110), la deuxième paroi radiale (140) et la première paroi inclinée (121), l'espace formant la chambre d'admission (150) de l'huile de lubrification, et **en ce que** la première et la deuxième paroi inclinée (121, 122) sont disposées chacune sur le premier et sur le deuxième plan radial (P1, P2) respectivement, la première paroi inclinée (121) formant un premier angle (α) avec le premier plan radial (P1), et la deuxième paroi inclinée (122) formant un deuxième angle (α') avec le deuxième plan radial (P2), le premier angle (α) étant plus petit que le deuxième angle (α') lorsque le premier plan radial (P1) est plus éloigné de la deuxième paroi radiale (140) que le deuxième plan radial (P2), et inversement.

2. Dispositif (1') selon la revendication 1, dans laquelle la portion de guidage (130) comprend une première paroi axiale (131) s'étendant parallèlement à l'axe central (X) depuis l'extrémité de la paroi inclinée (120), une paroi courbe (133) formant un fond de la forme en U de la portion de guidage (130) et s'étendant depuis une extrémité de la première paroi axiale (131), et une deuxième paroi axiale (132) s'étendant parallèlement à l'axe central (X) depuis une extrémité de la paroi courbe (133), la deuxième paroi radiale (140) s'étendant depuis une extrémité de la deuxième paroi axiale (132).

3. Dispositif (1') selon la revendication 2, dans laquelle un rapport entre une distance radiale E entre une extrémité radiale externe (140a) de la deuxième paroi radiale (140) et la deuxième paroi axiale (132), et une distance F entre l'extrémité radiale externe (140a) de la deuxième paroi radiale (140) et la première paroi axiale (131), étant tel que F/(E+F) est compris entre 0,4 et 0,8.

4. Dispositif (1') selon l'une quelconque des revendications 1 à 3, dans laquelle, dans le plan de coupe parallèle à l'axe central (X), les angles (α, α') entre les parois inclinées (121, 122) et une direction radiale perpendiculaire à l'axe central (X) est compris entre 10° et 60°.

5. Dispositif (1') selon l'une quelconque des revendications 1 à 4, dans lequel le premier et le deuxième plan radial (P1, P2) sont décalés axialement l'un de l'autre de telle sorte qu'une distance axiale (A) minimale entre la première et la deuxième paroi radiale (110, 140) de la gouttière est au minimum 20% plus grande qu'une distance axiale (G) entre le premier et le deuxième plan radial (P1, P2).

6. Dispositif (1') selon l'une quelconque des revendications 1 à 5, dans lequel une distance axiale minimale (C) entre la première paroi radiale (110) de la gouttière (100) et le plan radial (P1, P2) situé axialement le plus proche de la première paroi radiale (110) est supérieure ou égale à 1 mm, et une distance axiale minimale (B) entre la deuxième paroi radiale (140) de la gouttière (100) et le plan radial (P1, P2) situé axialement le plus proche de la deuxième paroi radiale (140) est supérieure ou égale à 1 mm.

7. Dispositif (1') selon l'une quelconque des revendications 1 à 6, comprenant trois plans radiaux (P1, P2, P3) d'éjection d'huile décalés axialement les uns des autres, une distance axiale (A) minimale entre la première et la deuxième paroi radiale (110, 140) de la gouttière (100) étant au minimum 20% plus grande qu'une distance axiale (G) entre les plans radiaux (P1, P2, P3) les plus éloignés axialement l'un de l'autre.

8. Dispositif (1') selon l'une quelconque des revendications 1 à 7, dans lequel une distance radiale (D) entre une extrémité radialement interne de la gouttière (100) et une extrémité radialement externe des brides annulaires (52A, 52B) de la couronne externe (50) est supérieure ou égale à 1 mm.

9. Dispositif (1') selon l'une quelconque des revendications 1 à 8, dans lequel les parois inclinées (121, 122) sont agencées de telle sorte à dévier vers la cavité d'évacuation (160) un jet d'huile radial éjecté par les canaux radiaux d'éjection d'huile (81, 82).

## Patentansprüche

1. Leistungsübertragungsvorrichtung (1') für Luftfahrzeugströmungsmaschine, umfassend:
- ein mechanisches Untersetzungsgetriebe (10), umfassend ein mittleres Zahnrad (30) und ein Hohlrad (50), die um eine Hauptdrehachse koaxial zueinander (Y) sind, und Planetenräder (40), die mit dem mittleren Zahnrad (30) und dem Hohlrad (50) kämmen, das Hohlrad (50) umfassend zwei Halbhohlräder (50A, 50B), die jeweils einen äußeren ringförmigen Flansch (52A, 52B) aufweisen, die aneinander befestigt sind,
- eine Vielzahl von ersten Ölausstoßkanälen (81), die in einer ersten radialen Ebene (P1) senkrecht zu der Hauptdrehachse (Y) liegen, die zwischen den ringförmigen Flanschen (52A, 52B) gebildet und konfiguriert sind, um Schmieröl durch Zentrifugation auszustoßen,
- eine Schmierölrückgewinnungsrinne (100), die um eine Mittelachse (X) ringförmig ist und in einer Schnittebene parallel zu der Mittelachse (X) Folgendes umfasst, eine erste radiale Wand (110), die sich radial in Bezug auf die Mittelachse erstreckt, mindestens eine erste Wand (121), die in Bezug auf die erste radiale Wand (110) geneigt ist und sich von einem äußeren radialen Ende der ersten radialen Wand (110) erstreckt, einen Führungsabschnitt (130), der generell eine U-Form aufweist, der sich von einem Ende der geneigten Wand (120) erstreckt, und eine zweite radiale Wand (140), die sich in Bezug auf die Mittelachse (X) von einem Ende des Führungsabschnitts (130) radial nach außen erstreckt, einen Raum, der von der ersten radialen Wand (110) begrenzt wird, wobei die zweite radiale Wand (140) und die mindestens eine erste geneigte Wand (121) eine Einlasskammer (150) für das Schmieröl und einen Raum, der durch den Führungsabschnitt (130) begrenzt wird, bilden, und die zweite radiale Wand (140) einen Auslasshohlraum (160) für das Schmieröl bildet, wobei die Rinne (100) radial um die ringförmigen Flansche (52A, 52B) angeordnet ist, sodass die Einlasskammer (150) der Rinne radial gegenüber den ersten Ölausstoßkanälen (81) ist, die Vorrichtung (1') umfassend eine Rotorwelle (2a), die einen Rotorflansch (2a') aufweist, der an einem der ringförmigen Flansche (52A, 52B) des Hohlrads (50) befestigt ist, und mindestens eine zweite radiale Ebene (P2) senkrecht zu der Hauptdrehachse (Y) und umfassend eine Vielzahl von zweiten Ölausstoßkanälen (82), die zwischen dem Rotorflansch (2a') und dem einen der ringförmigen Flansche (52A, 52B) gebildet sind, wobei die mindestens eine zweite radiale Ebene (P2) in Bezug auf die erste radiale Ebene (P1) axial versetzt ist, **dadurch gekennzeichnet, dass** die Rinne (100) eine zweite geneigte Wand (122) umfasst, die zusammen mit der ersten radialen Wand (110) die zweite radiale Wand (140) und die erste geneigte Wand (121) begrenzt, wobei der Raum die Einlasskammer (150) für das Schmieröl bildet, und dass die erste und die zweite geneigte Wand (121, 122) jeweils auf der ersten und der zweiten radialen Ebene (P1, P2) angeordnet sind, die erste geneigte Wand (121) einen ersten Winkel (α) mit der ersten radialen Ebene (P1) bildet, und die zweite geneigte Wand (122) einen zweiten Winkel (α') mit der zweiten radialen Ebene (P2) bildet, wobei der erste Winkel (α) kleiner als der zweite Winkel (α') ist, wenn die erste radiale Ebene (P1) weiter von der zweiten radialen Wand (140) entfernt ist als die zweite radiale Ebene (P2), und umgekehrt.

2. Vorrichtung (1') nach Anspruch 1, wobei der Führungsabschnitt (130) eine erste axiale Wand (131), die sich von dem Ende der geneigten Wand (120) parallel zu der Mittelachse (X) erstreckt, eine gekrümmte Wand (133), die einen Boden der U-Form des Führungsabschnitts (130) bildet und sich von einem Ende der ersten axialen Wand (131) aus erstreckt, und eine zweite axiale Wand (132), die sich von einem Ende der gekrümmten Wand (133) parallel zu der Mittelachse (X) aus erstreckt, umfasst, wobei sich die zweite radiale Wand (140) von einem Ende der zweiten axialen Wand (132) erstreckt.

3. Vorrichtung (1') nach Anspruch 2, wobei ein Verhältnis zwischen einem radialen Abstand E zwischen einem äußeren radialen Ende (140a) der zweiten radialen Wand (140) und der zweiten axialen Wand (132), und einem Abstand F zwischen dem äußeren radialen Ende (140a) der zweiten radialen Wand (140) und der ersten axialen Wand (131), derart ist, dass F/(E+F) zwischen 0,4 und 0,8 liegt.

4. Vorrichtung (1') nach einem der Ansprüche 1 bis 3, wobei die Winkel (α, α') zwischen den geneigten Wänden (121, 122) und einer radialen Richtung senkrecht zu der Mittelachse (X) in der Schnittebene parallel zu der Mittelachse (X) zwischen 10° und 60° liegt.

5. Vorrichtung (1') nach einem der Ansprüche 1 bis 4, wobei die erste und die zweite radiale Ebene (P1, P2) axial voneinander versetzt sind, sodass ein minimaler axialer Abstand (A) zwischen der ersten und der zweiten radialen Wand (110, 140) der Rinne mindestens 20 % größer ist als ein axialer Abstand (G) zwischen der ersten und der zweiten radialen Ebene (P1, P2).

6. Vorrichtung (1') nach einem der Ansprüche 1 bis 5, wobei ein minimaler axialer Abstand (C) zwischen der ersten radialen Wand (110) der Rinne (100) und der radialen Ebene (P1, P2), die sich axial am nächsten zu der ersten radialen Wand (110) befindet, größer als oder gleich wie 1 mm ist, und ein minimaler axialer Abstand (B) zwischen der zweiten radialen Wand (140) der Rinne (100) und der radialen Ebene (P1, P2), die sich axial am nächsten zu der zweiten radialen Wand (140) befindet, größer als oder gleich wie 1 mm ist.

7. Vorrichtung (1') nach einem der Ansprüche 1 bis 6, umfassend drei axial zueinander versetzte radiale Ölausstoßebenen (P1, P2, P3), wobei ein minimaler axialer Abstand (A) zwischen der ersten und der zweiten radialen Wand (110, 140) der Rinne (100) mindestens 20 % größer ist als ein axialer Abstand (G) zwischen den radialen Ebenen (P1, P2, P3), die am weitesten axial voneinander entfernt sind.

8. Vorrichtung (1') nach einem der Ansprüche 1 bis 7, wobei ein radialer Abstand (D) zwischen einem radial inneren Ende der Rinne (100) und einem radial äußeren Ende der ringförmigen Flansche (52A, 52B) des Hohlrads (50) größer als oder gleich wie 1 mm ist.

9. Vorrichtung (1') nach einem der Ansprüche 1 bis 8, wobei die geneigten Wände (121, 122) derart angeordnet sind, dass sie einen radialen Ölstrahl, der von den radialen Ölausstoßkanälen (81, 82) ausgestoßen wird, in Richtung des Auslasshohlraums (160) ablenken.

## Claims

1. A power transmission device (1') for an aircraft turbomachine, comprising:
- a mechanical reducer (10) comprising a central gear (30) and an outer ring gear (50) coaxial with one another around a main axis of rotation (Y), and planet gears (40) meshing with the central gear (30) and the outer ring gear (50), the outer ring gear (50) comprising two half-ring gears (50A, 50B) each having an outer annular flange (52A, 52B) attached to one another,
- a plurality of first oil ejection channels (81) contained in a first radial plane (P1) perpendicular to the main axis of rotation (Y), formed between the annular flanges (52A, 52B) and configured to eject lubrication oil by centrifugal force,
- a gutter (100) for recovering lubrication oil, annular around a central axis (X), and comprising, in a section plane parallel to the central axis (X), a first radial wall (110) extending radially with respect to the central axis, at least a first wall (121) inclined with respect to the first radial wall (110) and extending from one outer radial end of the first radial wall (110), a guide portion (130) having an overall U-shape extending from one end of the inclined wall (120), and a second radial wall (140) extending radially outward with respect to the central axis (X) from one end of the guide portion (130), a space delimited by the first radial wall (110), the second radial wall (140) and the at least first inclined wall (121) forming a lubrication oil intake chamber (150), and a space delimited by the guide portion (130) and the second radial wall (140) forming a lubrication oil evacuation cavity (160), the gutter (100) being radially disposed around the annular flanges (52A, 52B), such that the intake chamber (150) of the gutter is radially facing the first oil ejection channels (81), the device (1') comprising a rotor shaft (2a) having a rotor flange (2a') attached to one of the annular flanges (52A, 52B) of the outer ring gear (50), and at least a second radial plane (P2) perpendicular to the main axis of rotation (Y) and comprising a plurality of second oil ejection channels (82) formed between the rotor flange (2a') and said one of the annular flanges (52A, 52B), the at least one second radial plane (P2) being axially offset with respect to the first radial plane (P1), **characterized in that** the gutter (100) comprises a second inclined wall (122) delimitating, with the first radial wall (110), the second radial wall (140) and the first inclined wall (121), the space forming the lubrication oil intake chamber (150), and **in that** the first and the second inclined wall (121, 122) are each disposed on the first and on the second radial plane (P1, P2) respectively, the first inclined wall (121) forming a first angle (α) with the first radial plane (P1), and the second inclined wall (122) forming a second angle (α') with the second radial plane (P2), the first angle (α) being smaller than the second angle (α') when the first radial plane (P1) is further from the second radial wall (140) than the second radial plane (P2), and conversely.

2. The device (1') as claimed in claim 1, wherein the guide portion (130) comprises a first axial wall (131) extending parallel to the central axis (X) from the end of the inclined wall (120), a curved wall (133) forming a bottom of the U shape of the guide portion (130) and extending from one end of the first axial wall (131), and a second axial wall (132) extending parallel to the central axis (X) from one end of the curved wall (133), the second radial wall (140) extending from one end of the second axial wall (132).

3. The device (1') as claimed in claim 2, wherein a ratio of a radial distance E between an outer radial end (140a) of the second radial wall (140) and the second axial wall (132), to a distance F between the outer radial end (140a) of the second radial wall (140) and the first axial wall (131), being such that F/(E+F) is between 0.4 and 0.8.

4. The device (1') as claimed in any of claims 1 to 3, wherein, in the section plane parallel to the central axis (X), the angles (α, α') between the inclined walls (121, 122) and a radial direction perpendicular to the central axis (X) is between 10° and 60°.

5. The device (1') as claimed in any of claims 1 to 4, wherein the first and the second radial plane (P1, P2) are axially offset from one another such that a minimum axial distance (A) between the first and the second radial wall (110, 140) of the gutter is at least 20% greater than an axial distance (G) between the first and the second radial plane (P1, P2).

6. The device (1') as claimed in any of claims 1 to 5, wherein a minimum axial distance (C) between the first radial wall (110) of the gutter (100) and the radial plane (P1, P2) located axially closest to the first radial wall (110) is greater than or equal to 1 mm, and a minimum axial distance (B) between the second radial wall (140) of the gutter (100) and the radial plane (P1, P2) located axially closest to the second radial wall (140) is greater than or equal to 1 mm.

7. The device (1') as claimed in any of claims 1 to 6, comprising three radial oil ejection planes (P1, P2, P3) axially offset from one another, a minimum axial distance (A) between the first and the second radial wall (110, 140) of the gutter (100) being at least 20% greater than an axial distance (G) between the radial planes (P1, P2, P3) axially furthest from one another.

8. The device (1') as claimed in any of claims 1 to 7, wherein a radial distance (D) between a radially inner end of the gutter (100) and a radially outer end of the annular flanges (52A, 52B) of the outer ring gear (50) is greater than or equal to 1 mm.

9. The device (1') as claimed in any of claims 1 to 8, wherein the inclined walls (121, 122) are arranged such as to divert toward the evacuation cavity (160) a radial oil jet ejected by the radial oil ejection channels (81, 82).
